Europäisches Patentamt

European Patent Office

Office européen des brevets

(11) Veröffentlichungsnummer: **0 272 607 B1**

(19)

(12) **EUROPÄISCHE PATENTSCHRIFT**

(45) Veröffentlichungstag der Patentschrift: **22.04.92**

(21) Anmeldenummer: **87118676.3**

(22) Anmeldetag: **16.12.87**

(51) Int. Cl.⁵: **G03B** **1/20**, G03B 1/22

(54) **Filmschaltwerk für eine Laufbild-Filmaufnahmekamera.**

(30) Priorität: **19.12.86 DE 3643594**

(43) Veröffentlichungstag der Anmeldung:
**29.06.88 Patentblatt 88/26**

(45) Bekanntmachung des Hinweises auf die
Patenterteilung:
**22.04.92 Patentblatt 92/17**

(84) Benannte Vertragsstaaten:
**AT CH DE FR GB IT LI**

(56) Entgegenhaltungen:
CH-A- 654 421
DE-A- 2 342 707
US-A- 3 235 151
US-A- 3 587 960
US-A- 3 759 433

(73) Patentinhaber: **ARNOLD & RICHTER CINE TECHNIK GMBH & CO. BETRIEBS KG.
Türkenstrasse 89
W-8000 München 40(DE)**

(72) Erfinder: **Blaschek, Otto
Anwanderweg 6
W-8011 Aschheim(DE)**

(74) Vertreter: **Ninnemann, Detlef, Dipl.-Ing.
Patentanwälte Maikowski & Ninnemann Xantener Strasse 10
W-1000 Berlin 15(DE)**

## Beschreibung

Die Erfindung betrifft ein Filmschaltwerk der im Oberbegriff des Anspruchs 1 angegebenen Art.

Ein derartiges Filmschaltwerk ist beispielsweise aus der DE-OS 31 01 813 bekanntgeworden. Dieses oder ähnliche Filmschaltwerke haben den Nachteil, daß die einzelnen Teile der Transportgetriebe für beide Greifer zwischen zwei Lagerplatinen angeordnet sind, die der Lagerung der Antriebswelle bzw. -wellen dienen. Dieser Aufbau bedingt Beschränkungen hinsichtlich der konstruktiven Ausbildung einzelner Elemente der Transportgetriebe, die so nicht optimal für bestmögliche Verschleißfestigkeit, Auswuchtung, Laufruhe und Wartungsmöglichkeit wählbar sind. Bezüglich der Montage- und Wartungsmöglichkeit der beiden Transportgetriebe besteht ein Nachteil schon darin, daß zwischen den Lagerplatinen sich der Zusammenbau und die allenfalls notwendige Zerlegung und der anschließende erneute Zusammenbau schwierig und zeitraubend gestalten.

Der Erfindung liegt die Aufgabe zugrunde, ein Filmschaltwerk der eingangs genannten Gattung so zu gestalten, daß es bedeutend einfacher zusammenzubauen und zu warten ist, dabei jedoch noch zusätzlich verbesserte Verschleißfestigkeit, Auswuchtung und Laufruhe aufweist. Diese Aufgabe wird mit den kennzeichnenden Merkmalen des Anspruchs 1 gelöst.

Aufgrund dieser Ausbildung befinden sich nun nicht mehr die Transportgetriebe für die beiden Transportgreifer zwischen den Lagern der zu ihrem Antrieb dienenden Wellen, sondern außerhalb derselben und sind deshalb unmittelbar zugänglich. Kurbeln des Transportgetriebes können infolge der Außenanordnung offene Kurbelzapfen mit kleinem Durchmesser haben, die auch für verschleißarme Kugellager geeignet sind.

Weitere vorteilhafte Ausgestaltungen nach den Unteransprüchen tragen zur Lösung der gestellten Aufgabe bei. Dabei kann eine zusätzliche Antriebswelle, eine Hauptantriebswelle vorgesehen sein, um die das Filmschaltwerk von der Filmlauffläche wegschwenkbar ist, um letztere leicht zugänglich zu machen.

Schließlich betrifft die Erfindung nach Anspruch 11 auch ein Filmschaltwerk, dessen Transportgetriebe ein reines Kurbelgetriebe und deshalb besonders laufruhig ist. Dieses Getriebe läßt sich mit der in den vorhergehenden Ansprüchen angegebenen Anbringung außerhalb der Antriebswellen-Lager besonders gut verwirklichen.

Vorteilhafte Weiterbildungen der Erfindung sind in den Unteransprüchen gekennzeichnet bzw. werden nachstehend zusammen mit der Beschreibung der bevorzugten Ausführung der Erfindung anhand der Figuren näher dargestellt. Es zeigen:

Figur 1      das Getriebeprinzip des Filmschaltwerks,

Figur 2      einen Längsschnitt durch eine konstruktive Ausbildung des Filmschaltwerks der Figur 1,

Figur 3      eine Seitenansicht wesentlicher Teile des Filmschaltwerks nach den Figuren 1 und 2,

Figur 4      verschiedene Schwenkstellungen des als Ganzes verschwenkbaren Filmschaltwerks.

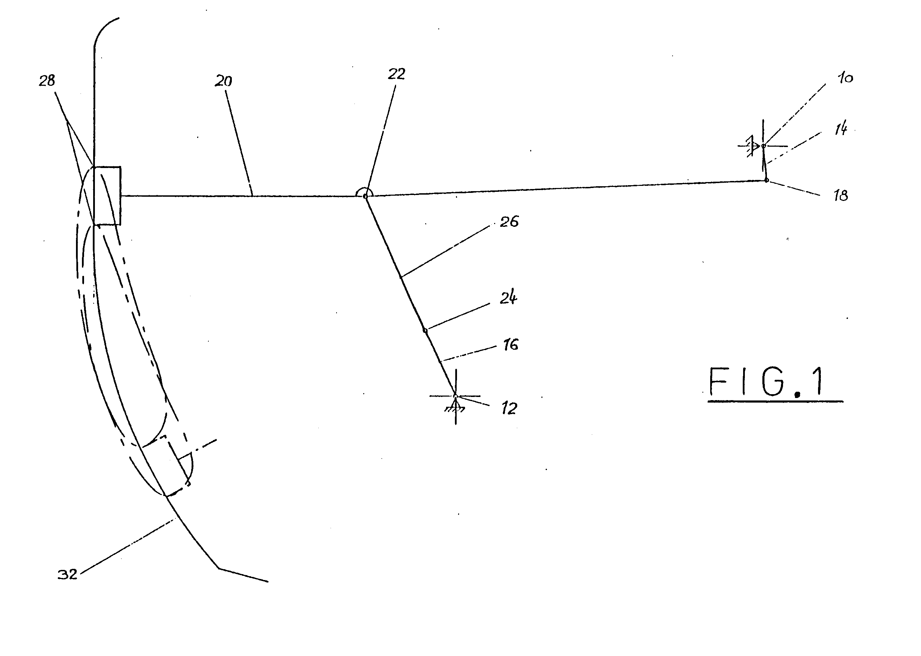

In Fig. 1 ist das Grundprinzip eines Transportgetriebes für den Transportgreifer dargestellt. Es sind zwei Wellen 10 und 12 vorgesehen. Die Welle 10 trägt eine Kurbel 14, die Welle 12 eine Kurbel 16. Das Ende der Kurbel 14 bildet einen Gelenkpunkt 18, an dem eine Transportgreifer-Lasche 20 angelenkt ist. Im Mittelabschnitt der Lasche 20 befindet sich ein Gelenkpunkt 22. Zwischen diesem und einem Gelenkpunkt 24 am Ende der Kurbel 16 ist ein Lenker 26 angeordnet.

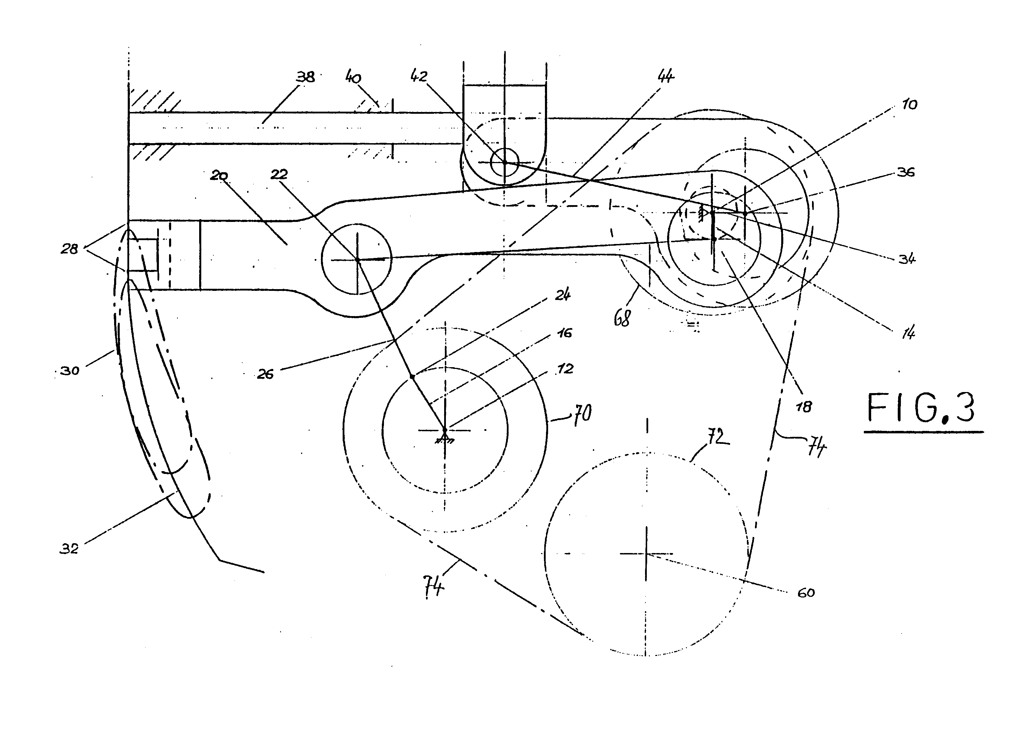

Die Teile 14 bis 26 bilden zusammen ein Transportgetriebe, das von den Wellen 10 und 12 antreibbar ist. Wie später noch im einzelnen erläutert wird, erfahren die Wellen 10 bis 12 eine gleichsinnige und gleich schnelle Drehung, wodurch das Transportgetriebe 14 bis 26 in eine solche Bewegung versetzt wird, daß die Spitzen 28 des Transportgreifers eine längliche, geschlossene Kurve 30 beschreiben, die in Fig. 3 dargestellt ist und an ihrem einen Ende in die Filmlauffläche 32 ein- und am anderen Ende wieder aus ihr austritt. Die Spitzen 28 greifen somit in Perforationen eines Films ein und bewegen ihn schrittweise weiter.

Die Fig. 3 zeigt ein konstruktives Beispiel der schon in Fig. 1 im Prinzip dargestellten Teile des Transportgetriebes und darüberhinaus einen Kurbeltrieb für einen Sperrgreifer. Hierzu ist auf der Welle 10 eine weitere Kurbel 34 befestigt, deren Ende einen Gelenkpunkt 36 bildet. Ein Sperrgreifer 38, der in einer in Fig. 3 nur schematisch angedeuteten Führung 40 in seiner Längsrichtung verschiebbar ist, trägt an seinem hinteren Ende ebenfalls einen Gelenkpunkt 42. Zwischen diesem und dem Gelenkpunkt 36 befindet sich eine Schubstange 44, mittels der Sperrgreifer 38 in seiner Längsführung 40 verschiebbar ist.

Der Winkelversatz der Kurbeln 14 und 34 auf der Welle 10 ist so gewählt, daß der Sperrgreifer 38 in bekannter Weise sich außerhalb der Filmlauffläche 32 befindet, solange die Transportgreifer-Spitzen 28 den Film weiterbewegen.

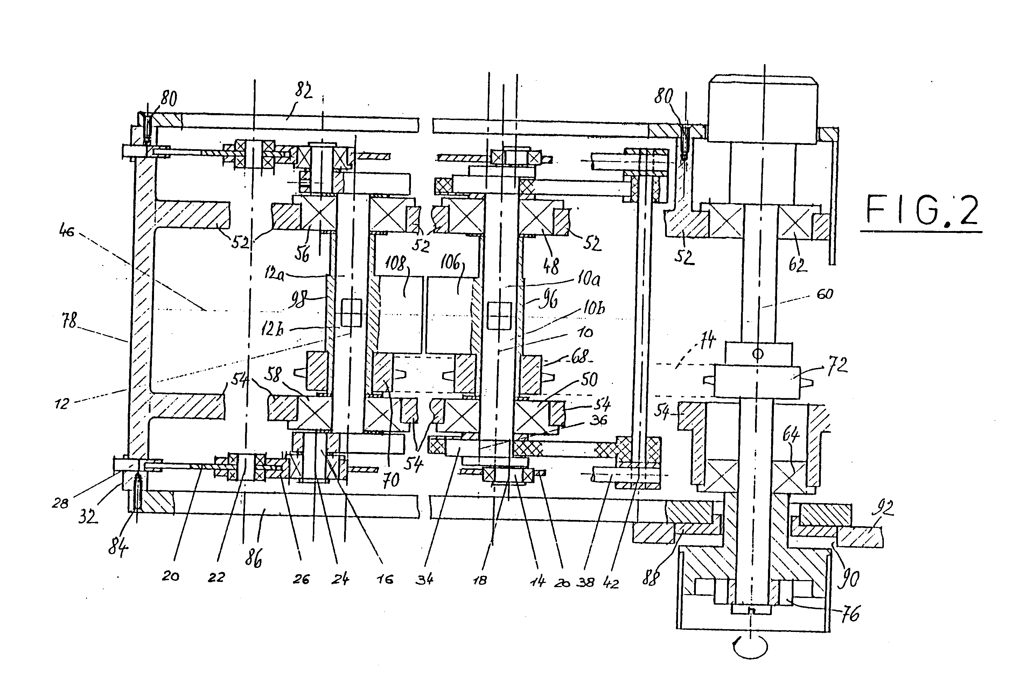

Gemäß Fig. 2 sind nun das Transportgetriebe 14 bis 26 für die Transportgreifer-Spitzen 28 sowie der Kurbeltrieb 34 bis 44 für den Sperrgreifer 28 in jeweils doppelter Ausführung vorhanden. Der Einfachheit halber ist dabei nur eines der beiden Transportgetriebe 14 bis 26 und einer der Kurbeltriebe 34 bis 41 mit den gleichen Bezugszeichen wie in den Figuren 1 und 3 bezeichnet. Das jeweilige Gegenstück liegt spiegelsymmetrisch zur Mittenebene 46 des in Fig. 2 dargestellten Filmschaltwerks.

Die Welle 10 ist in zwei Kugellagern 48 und 50 gelagert, die in Bohrungen je einer Lagerplatine 52 und 54 aufgenommen sind. Ebenso ist die Welle 12 in zwei Kugellagern 56 und 58 gelagert, die ebenfalls in Bohrungen der Lagerplatinen 52 und 54 aufgenommen sind. In den Lagerplatinen 52 und 54 ist außerdem über Kugellager 62 und 64 eine Hauptantriebswelle 60 gelagert.

Die Wellen 10, 12 und 66 stehen wegen ihrer Lagerung in den Lagerplatinen 52 und 54 in fester räumlicher Zuordnung zueinander. Jede der Wellen 10, 12 und 60 trägt ein gezahntes Riemenrad 68 bzw. 70 bzw. 72, über die ein Lochriemen 74 läuft. Die Hauptantriebswelle trägt darüberhinaus ein Kupplungsteil 76, an das ein (nicht dargestellter) Motor angekuppelt ist. Der Motor treibt über die Hauptantriebswelle 60 und den Riementrieb 68 bis 74 die Wellen 10 und 12 gleich schnell und gleichsinnig an, um den schon oben beschriebenen kinematischen Ablauf zu bewirken.

Die Lagerplatinen 52 und 54 sind Bestandteil eines in sich starren Rahmens 78, an dem sich auch die Filmlauffläche 32 befindet. An dem Rahmen 78 sind über Schrauben 80 eine Abdeckplatte 82 sowie über Schrauben 84 eine Schwenkplatte 86 starr befestigt. Mit der Schwenkplatte 86 ist ein Zentrieransatz 88 fest verbunden, der in einer Zentrierbohrung 90 eines kamerafesten Grundkörpers 92 so aufgenommen ist, daß er sich nach Art eines Gleitlagers darin drehen läßt.

Der Zentrieransatz 88 befindet sich an der Schwenkplatte 86 an der Stelle, an der seine Achse sich mit der Achse der Hauptantriebswelle 60 deckt. Auf diese Weise stellt letztere die Schwenkachse für das gesamte Filmschaltwerk dar, das somit ohne Eingriff in den Antrieb 60 bis 76 verschwenkbar ist.

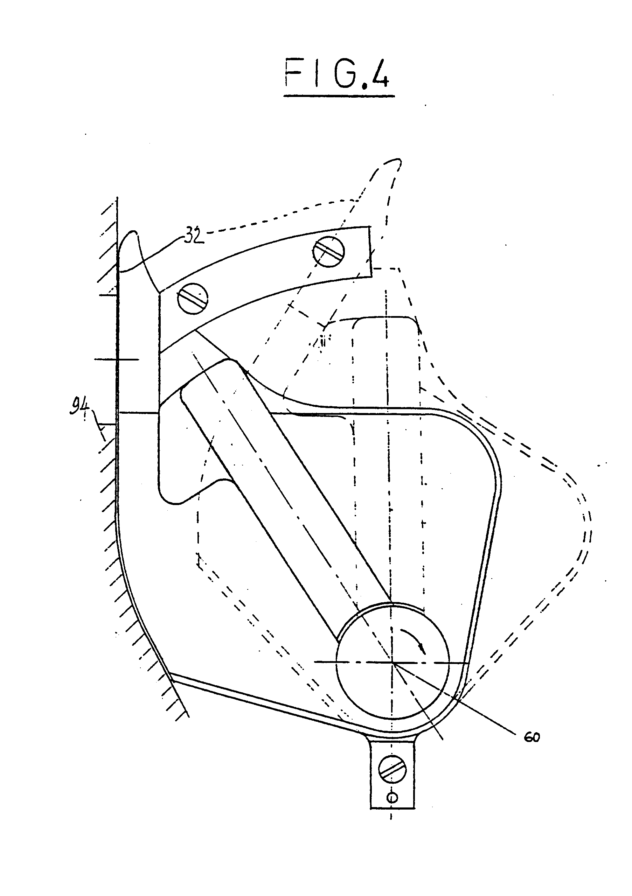

Die Figur 4 zeigt das Filmschaltwerk in seiner Betriebsstellung am Filmfenster 94 in voll ausgezogenen Umrißlinien, dagegen in der vom Filmfenster 94 weggeschwenkten Lage in gestrichelten Linien.

Die Montage des Filmschaltwerks gestaltet sich wie folgt sehr einfach.

Hierzu bestehen die Wellen 10 und 12 aus jeweils zwei mit ihren Lagern von außen in die jeweiligen Bohrungen der Lagerplatinen 52 und 54 eingeführt und in Kupplungshülsen 96 bzw. 98 gesteckt. Die Kupplungshülsen 96 und 98 sind gleichzeitig als Auswuchtmassen 106, 108 ausgebildet und tragen auch die schon früher erwähnten Riemenräder 68, 70.

Auf den so montierten Wellen 10 und 12 können gut zugänglich außerhalb der Lagerplatinen 52 und 54 die Bestandteile der Transportgetriebe 14 bis 26 montiert werden. Desgleichen gestaltet sich auch eine gegebenenfalls notwendige Wartung wegen der leichten Zugänglichkeit einfach.

Nach erfolgtem Zusammenbau der Transportgetriebe 14 bis 26 werden die Abdeckplatte 82 und die Schwenkplatte 86 angebracht und letztere mit ihrem Zentrieransatz 88 in die Zentrierbohrung 90 des kamerafesten Grundkörpers eingesetzt.

Die Erfindung beschränkt sich in ihrer Ausführung nicht auf das vorstehend angegebene bevorzugte Ausführungsbeispiel. Vielmehr ist eine Anzahl von Varianten denkbar, welche von der dargestellten Lösung auch bei grundsätzlich anders gearteten Ausführungen Gebrauch machen.

**Patentansprüche**

1. Filmschaltwerk für eine Laufbildkamera zum schrittweisen Transport eines an einem Bildfenster (94) vorbeilaufenden Films, mit beiderseits einer gedachten Mittenebene (46) angeordneten Transportgreifern (28), die zum Eingriff in zwei Perforationsreihen des Films jeweils mindestens eine Spitze aufweisen, wobei die Mittenebene (46) senkrecht zum Bildfenster in Laufrichtung des Films zwischen den Perforationsreihen steht, wobei jeder Transportgreifer (28) von je einem Transportgetriebe (14 - 26) so bewegt wird, daß seine Spitze bzw. Spitzen eine längliche, geschlossene Kurve durchläuft bzw. durchlaufen, an deren einen Schmalseite sie in die Perforationsreihen eingreift bzw. eingreifen und an deren anderen Schmalseite sie die Perforationsreihen wieder freigibt bzw. freigeben, und wobei beiden Transportgetrieben mindestens eine dem Antrieb derselben dienende, beiderseits der Mittenebene in Lagern (48, 50, 56, 58) gelagerte Welle (10, 12) gemeinsam ist, **dadurch gekennzeichnet, daß** beiderseits der Mittenebene (46) die Lager (48, 50, 56, 58) für die Wellen (10, 12) näher der Mittenebene (46) angeordnet sind als die Transportgetriebe (14 - 26).

2. Filmschaltwerk nach Anspruch 1, **dadurch gekennzeichnet,** daß die Lager (48, 50, 56, 58) in zwei beidseitig der Mittenebene (46) angeordneten Lagerplatinen (52, 54) aufgenommen sind, die näher der Mittenebene (46) angeordnet sind als die Transportgetriebe (14 bis 26).

3. Filmschaltwerk nach Anspruch 2, mit einer Antriebsverbindung zwischen wenigstens zwei zueinander synchron umlaufenden, dem Antrieb der Transportgetriebe dienenden Wellen (10, 12), **dadurch gekennzeichnet,** daß die Antriebsverbindung (68 bis 74) für den synchronen Umlauf zwischen den Lagerplatinen (52, 54) angeordnet ist.

4.	Filmschaltwerk nach Anspruch 3, **dadurch gekennzeichnet,** daß die Antriebsverbindung aus einem formschlüssigen Riementrieb (68 bis 74) besteht, der von einer weiteren Antriebswelle, der Hauptantriebswelle (60), angetrieben ist, um die die Lagerplatinen (52, 54) als Einheit mit den Transportgetrieben (14 bis 26) zwecks Freilegung der Filmlauffläche schwenkbar sind.

5.	Filmschaltwerk nach einem der vorangehenden Ansprüche, **dadurch gekennzeichnet,** daß Auswuchtmassen (106, 108) auf den Wellen (10, 12) zwischen den Lagern (48, 50 bzw. 56, 58) angebracht sind, die zentral für beide beidseitig der Mittenebene (46) angebrachten Transportgetriebe (14 bis 26) ausgelegt sind.

6.	Filmschaltwerk nach einem der Ansprüche 2 bis 5, **dadurch gekennzeichnet,** daß die dem Antrieb der Transportgetriebe (14 bis 26) dienenden Wellen (10, 12) aus jeweils zwei Teilwellen (10a, 10b bzw. 12a, 12b) bestehen, deren jede mit ihrem Lager (48, 50, 56, 58) von der der Mittenebene (46) abgewandten Seite in eine Öffnung der zugehörigen Lagerplatine (52, 54) einführbar und mit der jeweils anderen Teilwelle kuppelbar ist.

7.	Filmschaltwerk nach Anspruch 6, **dadurch gekennzeichnet,** daß ein Riemenrad (68 bzw. 70) des Riementriebs (68 bis 74) eine Auswuchtmasse (106 bzw. 108) sowie eine Kupplungshülse (96 bzw. 98) zum Kuppeln der Teilwellen (10a, 10b bzw. 12a, 12b) je eine vorgefertigte, gegebenenfalls einstückige Einheit bilden.

8.	Filmschaltwerk nach einem der Ansprüche 2 bis 7, **dadurch gekennzeichnet,** daß je ein Kurbeltrieb (34, 44) für je einen Sperrgreifer (38) entfernter zur Mittenebene (46) als die jeweilige Lagerplatine (52, 54) angeordnet ist.

9.	Filmschaltwerk nach einem der vorangehenden Ansprüche, **dadurch gekennzeichnet,** daß Gelenke (18, 22, 24, 36) der Transportgetriebe (14 bis 26) als Kugellager ausgebildet sind.

10.	Filmschaltwerk nach einem der vorangehenden Ansprüche 1 bis 8, **dadurch gekennzeichnet,** daß Gelenke der Transportgetriebe als Gleitlager ausgebildet sind.

11.	Filmschaltwerk nach Anspruch 1, **dadurch gekennzeichnet,** daß der Transportgreifer (28) auf einer Lasche (20) sitzt, die an ihrem einen Ende mit einer von der einen Antriebswelle (10) angetriebenen Kurbel (14) gelenkig verbunden ist und an deren Mittelabschnitt ein Lenker (26) angelenkt ist, der mit einer von der anderen Antriebswelle (12) angetriebenen Kurbel (16) gelenkig verbunden ist.

## Claims

1.	A film feeding mechanism for a cinematographic camera, for the step-by-step transport of a film which runs past a film window (94), with transport claws (28) arranged on either side of an imaginary central plane (46), which claws each have at least one point for engaging in two rows of sprocket holes on the film, the central plane (46) being perpendicular to the film window in the direction of travel of the film between the rows of sprocket holes, each transport claw (28) being moved by one transport gear mechanism (14 - 26) each in such a manner that its point or points passes or pass through an elongated, closed curve, on one narrow side of which it or they engages or engage in the rows of sprocket holes and on the other narrow side of which it or they again releases or release the rows of sprocket holes, and both transport gear mechanisms having in common at least one shaft (10, 12) serving for the driving thereof which is mounted in bearings (48, 50, 56, 58) on either side of the central plane,
characterised in that
the bearings (48, 50, 56, 58) for the shafts (10, 12) are arranged on either side of the central plane (46) closer to the central plane (46) than are the transport gear mechanisms (14 - 26).

2.	A film feeding mechanism according to Claim 1, characterised in that the bearings (48, 50, 56, 58) are held in two bearing plates (52, 54) located on either side of the central plane (46), which plates are located closer to the central plane (46) than are the transport gear mechanisms (14 to 26).

3.	A film feeding mechanism according to Claim 2, with a drive connection between at least two shafts (10, 12) which rotate synchronously with one another and serve to drive the transport gear mechanisms, characterised in that the drive connection (68 to 74) for the synchronous rotation is located between the bearing plates (52, 54).

4. A film feeding mechanism according to Claim 3, characterised in that the drive connection consists of a positive belt drive (68 to 74), which is driven by a further drive shaft, the main drive shaft (60), about which the bearing plates (52, 54) are pivotable as a unit with the transport gear mechanisms (14 to 26) for exposing the film travelling surface.

5. A film feeding mechanism according to one of the preceding Claims, characterised in that balancing masses (106, 108) are attached to the shafts (10, 12) between the bearings (48, 50 or 56, 58), which are constructed centrally for both transport gear mechanisms (14 to 26) attached on either side of the central plane (46).

6. A film feeding mechanism according to one of Claims 2 to 5, characterised in that the shafts (10, 12) serving to drive the transport gear mechanisms (14 to 26) each consist of two partial shafts (10a, 10b, or 12a, 12b, respectively), each side of which with its bearing (48, 50, 56, 58) can be introduced into an opening in the associated bearing plate (52, 54) from the side remote from the central plane (46) and can be coupled to the respective other partial shaft.

7. A film feeding mechanism according to Claim 6, characterised in that one belt wheel (68 or 70) of the belt drive (68 or 74), one balancing mass (106 or 108) and one coupling sleeve (96 or 98) for coupling the partial shafts (10a, 10b or 12a, 12b) each form a prefabricated, optionally one-piece unit.

8. A film feeding mechanism according to one of Claims 2 to 7, characterised in that one crank mechanism (34, 44) for one blocking claw (38) in each case is located further from the central plane (46) than the respective bearing plate (52, 54).

9. A film feeding mechanism according to one of the preceding Claims, characterised in that articulations (18, 22, 24, 36) of the transport gear mechanisms (14 to 26) are designed as ball bearings.

10. A film feeding mechanism according to one of the preceding Claims 1 to 8, characterised in that articulations of the transport gear mechanisms are designed as sliding bearings.

11. A film feeding mechanism according to Claim 1, characterised in that the transport claw (28) is seated on a bracket (20) which is articulated at one end to a crank (14) driven by one drive shaft (10) and to the middle section of which a guide rod (26) is connected which is articulated to a crank (16) driven by the other drive shaft (12).

**Revendications**

1. Mécanisme d'entraînement de film pour une caméra cinématographique, pour le transport pas à pas d'un film défilant devant une fenêtre de cadrage (94), comportant des griffes de transport (28) qui sont agencées de part et d'autre d'un plan médian imaginaire (46) et qui présentent chaque fois au moins un sommet pour la prise dans deux rangées de perforations du film, le plan médian (46) étant perpendiculaire dans le sens de défilement du film à la fenêtre de cadrage entre les rangées de perforations, chaque griffe de transport (28) étant déplacée par chaque fois un dispositif de transport (14 à 26) de façon que son sommet ou respectivement ses sommets parcourt ou respectivement parcourent une courbe allongée fermée sur un des petits côtés de laquelle il entre ou respectivement ils entrent en prise dans les rangées de perforations et sur l'autre petit côté de laquelle il libère ou respectivement ils libèrent en retour les rangées de perforations, au moins un arbre (10, 12) qui sert à l'entraînement des deux dispositifs de transport et qui est monté des deux côtés du plan médian dans des paliers (48, 50, 56, 58) étant commun à ces deux dispositifs, caractérisé en ce que des deux côtés du plan médian (46) les paliers (48, 50, 56, 58) des arbres (10, 12) sont agencés plus près du plan médian (46) que les dispositifs de transport (14 à 26).

2. Mécanisme d'entraînement de film suivant la revendication 1, caractérisé en ce que les paliers (48, 50, 56, 58) sont logés dans deux plaques de support (52, 54) qui sont agencées de part et d'autre du plan médian (46) et qui sont agencées plus près du plan médian (46) que les dispositifs de transport (14 à 26).

3. Mécanisme d'entraînement de film suivant la revendication 2, comportant une liaison d'entraînement entre au moins deux arbres (10, 12) qui tournent en synchronisme l'un par rapport à l'autre et qui servent à l'entraînement des dispositifs de transport, caractérisé en ce que la liaison d'entraînement (68 à 74) pour la rotation en synchronisme est agencée entre les plaques de support (52, 54).

4. Mécanisme d'entraînement de film suivant la revendication 3, caractérisé en ce que la liaison d'entraînement est constituée par une transmission à courroie (68 à 74), à liaison par la forme, qui est entraînée par un autre arbre d'entraînement, l'arbre d'entraînement principal (60), autour duquel les plaques de support (52, 54) peuvent pivoter sous la forme d'un ensemble avec les dispositifs de transport (14 à 26) dans le but de dégager la surface entraînée du film.

5. Mécanisme d'entraînement de film suivant l'une quelconque des revendications précédentes, caractérisé en ce que des masses d'équilibrage (106, 108) sont montées sur les arbres (10, 12) entre les paliers (48, 50 ou 56, 58) et en ce qu'elles sont agencées de façon centrale pour les deux dispositifs de transport (14 à 26) montés de part et d'autre du plan médian (46).

6. Mécanisme d'entraînement de film suivant l'une quelconque des revendications 2 à 5, caractérisé en ce que les arbres (10, 12) qui servent à l'entraînement des dispositifs de transport (14 à 26) sont constitués chaque fois par deux arbres partiels (10a, 10b et respectivement 12a, 12b) dont chacun peut être introduit avec son palier (48, 50, 56, 58), à partir du côté tourné à l'écart du plan médian (46), dans une ouverture de la plaque de support (52, 54) correspondante et peut être accouplé à l'autre arbre partiel respectif.

7. Mécanisme d'entraînement de film suivant la revendication 6, caractérisé en ce qu'une poulie à courroie (68 ou respectivement 70) de la transmission à courroie (68 à 74), une masse d'équilibrage (106 ou respectivement 108) ainsi qu'une douille d'accouplement (96 ou respectivement 98) pour l'accouplement des arbres partiels (10a, 10b ou respectivement 12a, 12b) forment chaque fois un ensemble, éventuellement d'une pièce, préfabriqué.

8. Mécanisme d'entraînement de film suivant l'une quelconque des revendications 2 à 7, caractérisé en ce qu'une commande à manivelle respective (34, 44) pour une griffe d'arrêt respective (38) est agencée de façon plus éloignée du plan médian (46) que la plaque de support respective (52, 54).

9. Mécanisme d'entraînement de film suivant l'une quelconque des revendications précédentes, caractérisé en ce que des articulations (18, 22, 24, 36) des dispositifs de transport (14 à 16) sont réalisés sous la forme de roulements à billes.

10. Mécanisme d'entraînement de film suivant l'une quelconque des revendications 1 à 8 précédentes, caractérisé en ce que les articulations des dispositifs de transport sont réalisées sous la forme de paliers lisses.

11. Mécanisme d'entraînement de film suivant la revendication 1, caractérisé en ce que la griffe de transport (38) est située sur une barre (20) qui est raccordée de façon articulée à une de ses extrémités à une manivelle (14) entraînée par un des arbres d'entraînement (10) et dont la section médiane est articulée sur une bielle (26) qui est raccordée de façon articulée à une manivelle (16) entraînée par l'autre arbre d'entraînement (12).

FIG.1

EP 0 272 607 B1

FIG.2

EP 0 272 607 B1

FIG.3

9

EP 0 272 607 B1

# FIG.4